# EUROPEAN PATENT SPECIFICATION

(11) **EP 4 311 705 B1**
(45) Date of publication and mention of the grant of the patent: **09.07.2025**
(21) Application number: 23187306.8
(22) Date of filing: 24.07.2023
(51) Int. Cl.: B60K 35/00, B60K 37/00, G03B 21/62, G02B 5/32

(54) **DISPLAY APPARATUS AND DISPLAY BOARD**
ANZEIGEVORRICHTUNG UND ANZEIGETAFEL
APPAREIL D'AFFICHAGE ET PANNEAU D'AFFICHAGE

(30) Priority: 26.07.2022 US 202263392125 P; 21.09.2022 CN 202211149893
(43) Date of publication of application: 31.01.2024
(73) Proprietor: Coretronic Corporation, Hsin-Chu 300 (TW)
(72) Inventor: Huang, Yu-An, Hsin-Chu 300 (TW)
(74) Representative: Ter Meer Steinmeister & Partner

(56) References cited:
- US-A1- 2016 357 094
- US-A1- 2020 369 223

## Description

This application claims the priority benefits of U.S. provisional application serial no. 63/392,125, filed on July 26, 2022 and China application serial no. 202211149893.7, filed on September 21, 2022.

### BACKGROUND

### Technical Field

The disclosure relates to an optical apparatus and an optical board, and particularly relates to a display apparatus and a display board.

### Description of Related Art

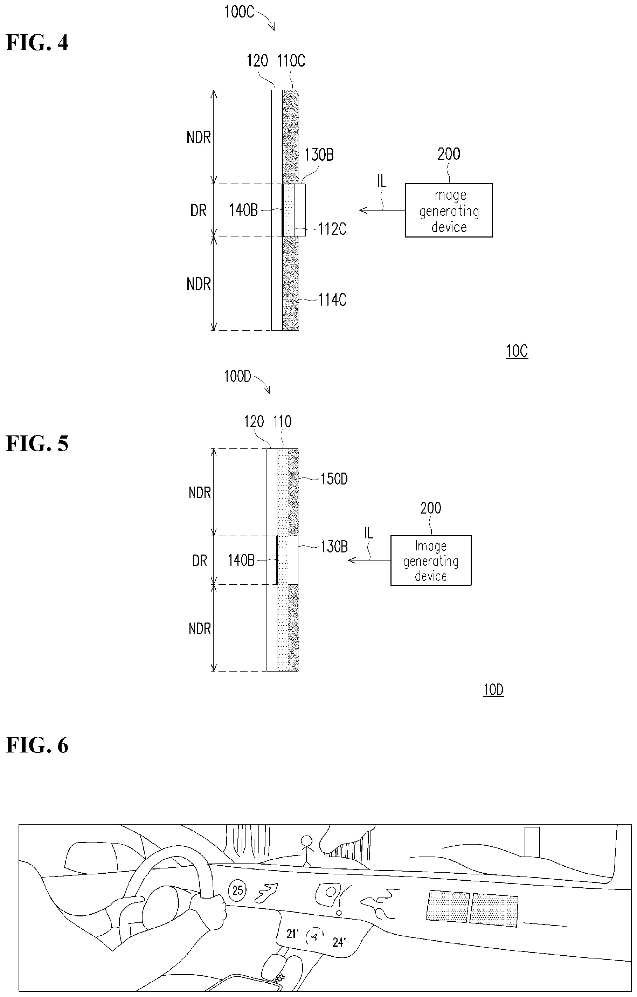

In order to be applied to a vehicle, an information display region of vehicle interior decoration may present an appearance of its decoration part when a display function is not turned on, and present an information image when the display function is turned on (as shown in FIG. 6). In order to achieve the aforementioned effect, a display apparatus currently disposed inside the decoration part of the vehicle interior decoration uses a high-brightness backlight together with a local dimming technology to overcome a problem of low transmittance of the decoration part. In brief, if the transmittance of the decoration part is 10%, and a brightness of the display image seen by the user should ideally reach 500-1000 nits, the display apparatus needs to provide a brightness of 5,000 to 10,000 nits, and a brightness of a backlight source of the display apparatus should be at least 250,000 to 500,000 nits. However, such brightness cannot be achieved even by the Mini LED display apparatus of the highest specification in the market, which makes the brightness of the information display image of the vehicle interior decoration lower, and in a brighter usage environment (such as sunny days), a user will not be able to clearly see a displayed image.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

An example of the prior art is disclosed in US 2016/357094 A1 and US 2020/369223 A1.

### SUMMARY

The disclosure is directed to a display board and a display apparatus using the display board, which meet a requirement of ideal brightness under a condition of low light transmittance of the display board

Other objects and advantages of the disclosure may be further understood from the technical features disclosed herein

The object is solved by the features of the independent claims. Preferred embodiments are given in the dependent claims.

In order to achieve one, a part, or all of the above objects or other objects, an embodiment of the disclosure provides a display apparatus including a display board and an image generating device. The display board has at least one display region, which includes a substrate, a decorative film, and a holographic optical element film. The substrate has a light transmittance in the display region. The decorative film is disposed on one side of the substrate. The holographic optical element film is disposed in at least one of the at least one display region, and is disposed on another side of the substrate relative to the decorative film. The substrate is disposed between the decorative film and the holographic optical element film. The image generating device is configured to project image light toward the holographic optical element film. The holographic optical element film is disposed between the substrate and the image generating device. The holographic optical element film converts the image light into display light, and transmits the display light toward the substrate.

In order to achieve one, a part, or all of the above objects or other objects, an embodiment of the disclosure further provides a display board, which has at least one display region, and includes a substrate, a decorative film, and a holographic optical element film. The substrate has a light transmittance in the display region. The decorative film is disposed on one side of the substrate. The holographic optical element film is disposed in at least one of the at least one display region, and is disposed on another side of the substrate relative to the decorative film. The substrate is disposed between the decorative film and the holographic optical element film.

In one or more embodiments, the light transmittance of the substrate and the decorative film of the display board in the at least one display region may fall within a range of 1% to 30%.

In one or more embodiments, a light-emitting angle of the display light after passing through the substrate may falls within a range of 0 degree to 45 degrees.

In one or more embodiments, the display apparatus may further comprise a touch sensor film located between the decorative film and the substrate.

The display board has a non-display region surrounding the at least one display region, wherein the light transmittance of the non-display region is lower than the light transmittance of the at least one display region.

In one or more embodiments, a light transmittance of the substrate in the non-display region may be the same as the light transmittance of the substrate in the at least one display region.

In one or more embodiments, materials of the substrate in the at least one display region and the non-display region may be different.

In one or more embodiments, the substrate may be doped with a colorant.

In one or more embodiments, concentrations of the colorant in the at least one display region and the non-display region may be different.

In one or more embodiments, thicknesses of the substrate in the at least one display region and the non-display region may be different.

In one or more embodiments, the display apparatus may further comprise a light absorbing film.

In one or more embodiments, the light absorbing film may be disposed in the non-display region.

In one or more embodiments, the light absorbing film may be disposed on the another side of the substrate relative to the decorative film

In one or more embodiments, a ratio of a brightness of the display light after passing through the display board to a brightness of the image light may be greater than 5%.Based on the above, in an embodiment of the disclosure, since the display apparatus or the display board is configured with the holographic optical element film, the light energy is concentrated, thereby improving the brightness of the display board within a viewing angle range.

Other objectives, features and advantages of the present disclosure will be further understood from the further technological features disclosed by the embodiments of the present disclosure wherein there are shown and described preferred embodiments of this disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a display region of a display apparatus of a first embodiment of the disclosure.
FIG. 2 is a schematic diagram of a display region of a display apparatus of a second embodiment of the disclosure.
FIG. 3A is a schematic diagram of a display apparatus of a third embodiment of the disclosure.
FIG. 3B is a schematic diagram of the display apparatus of the embodiment of FIG. 3A when a display function is turned on and not turned on.
FIG. 4 is a schematic diagram of a display apparatus of a fourth embodiment of the disclosure.
FIG. 5 is a schematic diagram of a display apparatus of a fifth embodiment of the disclosure.
FIG. 6 is a schematic diagram of a vehicle interior decoration with a display function.

### DESCRIPTION OF THE EMBODIMENTS

In the following detailed description of the preferred embodiments, reference is made to the accompanying drawings which form a part hereof, and in which are shown by way of illustration specific embodiments in which the disclosure may be practiced. In this regard, directional terminology, such as "top," "bottom," "front," "back," etc., is used with reference to the orientation of the Figure(s) being described. The components of the present disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

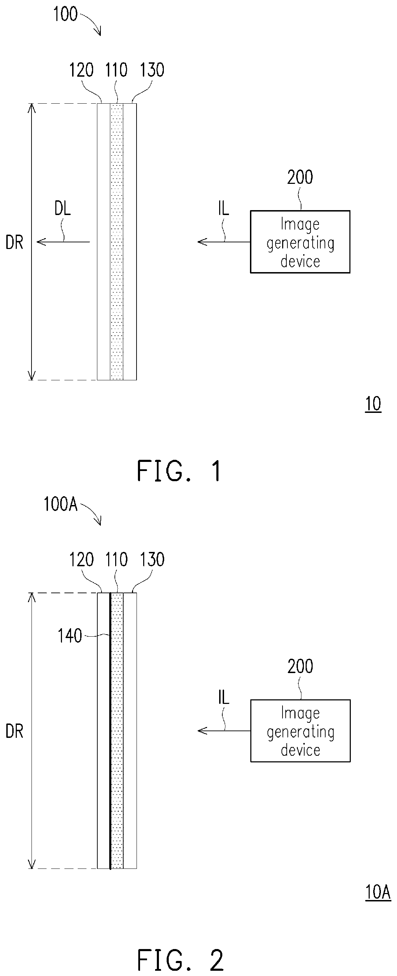

FIG. 1 is a schematic diagram of a display region of a display apparatus according to a first embodiment of the disclosure. Referring to FIG. 1, an embodiment of the disclosure provides a display apparatus 10 including a display board 100 and an image generating device 200. The display board 100 is suitable for being installed in interior decoration, an instrument panel, a central control region, etc., of a vehicle, but the disclosure is not limited thereto. The image generating device 200 is, for example, a projector.

In the embodiment, the display board 100 has at least one display region DR. For the convenience of description, FIG. 1 only illustrates one display region DR. The display board 100 includes a substrate 110, a decorative film 120 and a holographic optical element film 130. The substrate 110 has a light transmittance in the display region DR. A material of the substrate 110 may be vinyl polymer, such as acrylic, but the disclosure is not limited thereto. A manner of forming the display board 100 is, for example, to use an in-mold electronics (IME) technology, to form the decorative film

120 or other electronic components (such as LED, etc.) or circuit layers required for appearance together with the substrate 110 by means of insert-molding, and then attach the holographic optical element film 130. The decorative film 120 is, for example, a plate with a texture on the surface, such as a plastic member with wood grain or leather texture on the surface.

In the embodiment, the decorative film 120 is disposed on one side of the substrate 110. The holographic optical element film 130 is disposed in at least one of the at least one display region DR, and is disposed on the other side of the substrate 110 relative to the decorative film 120, i.e., the substrate 110 is disposed between the decorative film 120 and the holographic optical element film 130.

In the embodiment, the image generating device 200 is used to project image light IL towards the holographic optical element film 130, for example, a projection area of the image light IL on the display board 100 is less than or equal to a setting area of the holographic optical element film 130, and the projection area of image light IL falls within the setting area of the holographic optical element film 130. The holographic optical element film 130 is disposed between the substrate 110 and the image generating device 200. The holographic optical element film 130 converts the image light IL into display light DL, and transmits the display light DL toward the substrate 110. In other embodiments, when the display board 100 has the display regions DR, the image generating device 200 may also be one or more image generating devices.

In the embodiment, a light-emitting angle of the display light DL after passing through the substrate 110 is within a range of 0 degree to 45 degrees, preferably within a range of 0 degree to 30 degrees, and a ratio of a brightness of the display light DL after passing through the display board 100 to a brightness of the image light IL is greater than 5%, preferably greater than 10%. The light-emitting angle may be defined as an angle range of the display light DL relative to a central axis (for example, a range where a light brightness is greater than 10% of the maximum brightness, but the disclosure is not limited thereto), where the central axis is a stacking direction of the decorative film 120, the substrate 110 and the holographic optical element film 130. Namely, based on a diffraction principle of the holographic optical element film 130, a light output range of the display light DL may be concentrated, and a field of view (FOV) angle of the display board 100 may be concentrated within the range of 0 degree to 45 degrees. Therefore, under the effect that the light output range of the display light DL is concentrated, usage efficiency of the light energy of the display apparatus 10 or the display board 100 is improved, and the brightness of the display light DL seen by the user at a specific position (for example, the user is sitting in a driver's seat) is also enhanced.

In the embodiment, a light transmittance of the substrate 110 and the decorative film 120 of the display board 100 in the display region DR (a light transmittance of the substrate 110 and the decorative film 120) falls within a range of 1% to 30% or 1% to 50%, which is, for example, 10%. For example, the substrate 110 is a light transmitting element (for example, a light transmittance thereof is greater than 95%), and the light transmittance of the decorative film 120 is, for example, 10%.

Based on the above, in the embodiment, the display apparatus 10 or the display board 100 is provided with the holographic optical element film 130. When the image light IL is transmitted to the holographic optical element film 130 and converted into the display light DL, the light-emitting angle of the display light DL after passing through the substrate 110 may be concentrated, so that the light energy may be concentrated, thereby improving the brightness of the display board 100 within a viewing angle range, where the viewing angle range may be designed to cover, for example, a range of vehicle driver's eyes. In other embodiments, the display region DR is, for example, set in front of a passenger's seat, and the viewing angle range may be designed to cover, for example, a range of passenger's eyes, so that the display light DL will not be observed by a driver, so as to avoid driver's distraction when displaying images.

FIG. 2 is a schematic diagram of a display region of a display apparatus according to a second embodiment of the disclosure. Referring to FIG. 2, a display apparatus 10A is similar to the display apparatus 10 in FIG. 1, and a main difference therebetween is that in the embodiment, a display board 100A of the display apparatus 10A further includes a touch sensor film 140 (e.g., capacitive touch sensor film or resistive touch sensor film). The touch sensor film 140 is located between the decoration film 120 and the substrate 110. Since the display apparatus 10A is provided with the touch sensor film 140, it may have a touch sensing function in the display region DR. Other advantages of the display apparatus 10A are similar to those of the display apparatus 10, and details thereof are not repeated here.

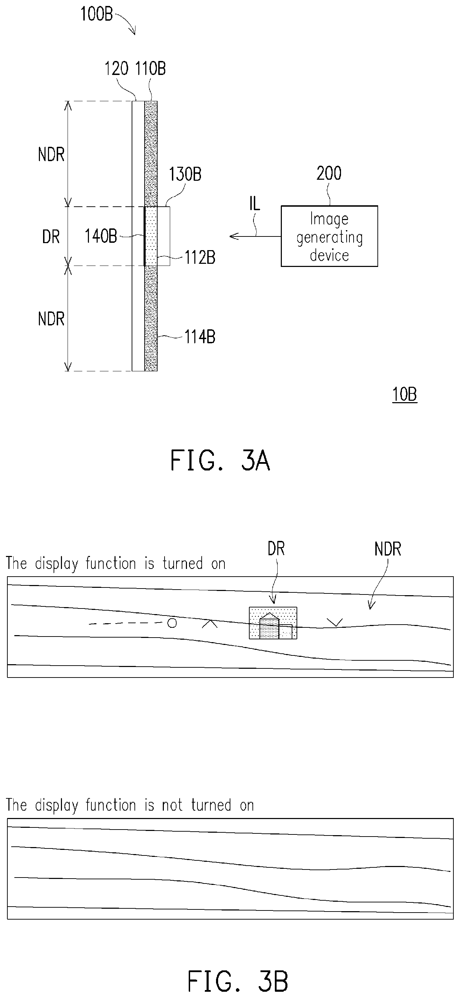

FIG. 3A is a schematic diagram of a display apparatus according to a third embodiment of the disclosure. FIG. 3B is a schematic diagram of the display apparatus of the embodiment of FIG. 3A when a display function is turned on and not turned on. Referring to FIG. 3A and FIG. 3B, a display apparatus 10B is similar to the display apparatus 10A of FIG. 2, wherein Figs. 3A and 3B further show that a display board 100B of the display apparatus 10B, according to the claimed invention, further has a non-display region NDR, and the non-display region NDR surrounds the display region DR (as shown in FIG. 3B). Similar to FIG. 1, FIG. 3A simply illustrates one display region DR, but in other embodiments, the display apparatus 10B may have the display regions DR. When the display apparatus 10B has the display regions DR, the image generating device 200 (one or more) may be used to project the image light IL of different contents or the image light IL of the same content to the different display regions DR, so that the different display regions DR may present different images or a same image.

In the embodiment, materials of the substrate 110B in the display region DR and the non-display region NDR are different, so that the display region DR of the display board 100B is light-transmitting region, and the non-display region NDR of the display board 100B is low light-transmitting region (for example, the light transmittance is less than 20%). For example, the substrate 110B may be doped with a colorant, and concentrations of the colorant in the display region DR and the non-display region NDR are different (for example, the concentration of the colorant in the display region DR is less than 5%, or no colorant is doped, and the concentration of the colorant in the non-display region NDR is greater than 80%). Alternatively, the colorant (or no colorant) used in a region 112B of the substrate 110B corresponding to the display region DR (or without colorants) and the colorant used in a region 114B of the substrate 110B corresponding to the non-display region NDR may have different colors. In this way, it is possible to further prevent light beams (for example, unexpected stray light) from passing through the non-display region NDR, thereby affecting aesthetics of the display board 100B. Further, when the display function of the display apparatus 10B is turned on, the image light IL will not be transmitted out from the non-display region NDR, and when the display function is not turned on, the unexpected stray light will not be transmitted out from the non-display region NDR (as shown in FIG. 3B).

Moreover, in the embodiment, the holographic optical element film 130B and the touch sensor film 140B are only set on the display region DR. The advantages of the display apparatus 10B are similar to those of the display apparatus 10A, and details thereof are not repeated here.

FIG. 4 is a schematic diagram of a display apparatus according to a fourth embodiment of the disclosure. Referring to FIG. 4, a display apparatus 10C is similar to the display apparatus 10B of FIG. 3A, and a main difference therebetween is that in the embodiment, a substrate 110C of a display board 100C of the display apparatus 10C has different thicknesses in the display region DR (i.e., the region 112C) and the non-display region NDR (i.e., the region 114C) (for example, a thickness in the stacking direction of the decorative film 120, the substrate 110 and the holographic optical element film 130). For example, the thickness of the substrate 110C at the non-display region NDR is greater than (for example, 1.5 times or more) the thickness of the substrate 110C in the display region DR. In this way, a light shielding property of the non-display region NDR is further enhanced. In other embodiments, concentrations of the doped colorants of the substrate 110B of the display board 100C of the display apparatus 10C are, for example, the same. The advantages of the display apparatus 10C are similar to those of the display apparatus 10B, and details thereof are not repeated here.

FIG. 5 is a schematic diagram of a display apparatus according to a fifth embodiment of the disclosure. Referring to FIG. 5, a display apparatus 10D is similar to the display apparatus 10B of FIG. 3A, and a main difference therebetween is that in this embodiment, a display board 100D of the display apparatus 10D further includes a light absorbing film 150D, and the light transmittance of the substrate 110 in the non-display region NDR and the display region DR is the same. The light absorbing film 150D is disposed on the substrate 110, and is located on the same side of the holographic optical element film 130B and surrounds the holographic optical element film 130B. The light absorbing film 150D is, for example, a black adhesive film, but the disclosure is not limited thereto. The light absorbing film 150D is disposed in the non-display region NDR, and is disposed on the other side of the substrate 110 with respect to the decorative film 120.

In the embodiment, a light transmittance of the substrate 110 in the non-display region NDR is the same as a light transmittance of the substrate 110 in the display region DR. In other embodiments, the light transmittances of the substrate 110 in the non-display region NDR and the display region DR are different. The advantages of the display apparatus 10D are similar to those of the display apparatus 10B, and details thereof are not repeated here.

In summary, in an embodiment of the disclosure, the display apparatus or the display board is provided with a holographic optical element film, so that the light energy is concentrated, thereby improving the brightness of the display apparatus or the display board within the viewing angle range. Therefore, the display apparatus or the display board of the embodiment of the disclosure may meet the requirement of ideal brightness under the condition of low light transmittance of the display board.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims.

## Claims

1. A display board (100) having at least one display region (DR), comprising:
a substrate (110), having a light transmittance in the at least one display region (DR);
a decorative film, disposed on one side of the substrate (110);
a holographic optical element film, disposed in at least one of the at least one display region (DR), and disposed on another side of the substrate (110) relative to the decorative film, wherein the substrate (110) is disposed between the decorative film and the holographic optical element film; and
a non-display region (NDR) surrounding the at least one display region (DR),
**characterized in that**
a light transmittance of the non-display region (NDR) is lower than a light transmittance of the at least one display region (DR).

2. The display board (100) according to claim 1, wherein the light transmittance of the substrate (110) and the decorative film (120) of the display board (100) in the at least one display region (DR) falls within a range of 1% to 30%.

3. The display board (100) according to any one of the preceding claims, further comprising a touch sensor film (140) located between the decorative film (120) and the substrate (110).

4. The display board (100) according to claim 1, wherein materials of the substrate (110) in the at least one display region (DR) and the non-display region (NDR) are different.

5. The display board (100) according to any one of the preceding claims, wherein the substrate (110) is doped with a colorant.

6. The display board (100) according to claim 5, wherein concentrations of the colorant in the at least one display region (DR) and the non-display region (NDR) are different.

7. The display board (100) according to any one of the preceding claims, wherein thicknesses of the substrate (110) in the at least one display region (DR) and the non-display region (NDR) are different.

8. The display board (100) according to any one of the preceding claims, further comprising a light absorbing film (150D).

9. The display board (100) according to claim 8, wherein the light absorbing film (150D) is disposed in the non-display region (NDR)

10. The display board (100) according to claim 8 or 9, wherein the light absorbing film (150D) is disposed on the another side of the substrate (110) relative to the decorative film (120).

11. A display apparatus (10), comprising:
a display board (100) as claimed in any one of the claims 1 - 10; and
at least one image generating device (200),
wherein the at least one image generating device (200) is configured to project image light (IL) toward the holographic optical element film (130),
wherein the holographic optical element film (130) is disposed between the substrate (110) and the at least one image generating device (200),
wherein the holographic optical element film (130) is configured to convert the image light (IL) into display light (DL), and is configured to transmit the display light (DL) toward the substrate (110).

12. The display apparatus (10) according to claim 11, wherein a light-emitting angle of the display light (DL) after passing through the substrate (110) falls within a range of 0 degree to 45 degrees.

13. The display apparatus (10) according to any one of the preceding claims 11-12, wherein a ratio of a brightness of the display light (DL) after passing through the display board (100) to a brightness of the image light (IL) is greater than 5%.

## Patentansprüche

1. Anzeigetafel (100) mit mindestens einem Anzeigebereich (DR), die umfasst:
ein Substrat (110) mit einer Lichtdurchlässigkeit in dem mindestens einen Anzeigebereich (DR);
eine dekorative Schicht, die auf einer Seite des Substrats (110) angeordnet ist;
eine Schicht holografischer optischer Elemente, die in mindestens einem des mindestens einen Anzeigebereichs (DR) angeordnet ist und auf einer anderen Seite des Substrats (110) relativ zu der dekorativen Schicht angeordnet ist, wobei das Substrat (110) zwischen der dekorativen Schicht und der Schicht holografischer optischer Elemente angeordnet ist; und
einen Nichtanzeigebereich (NDR), der den mindestens einen Anzeigebereich (DR) umgibt,
**dadurch gekennzeichnet, dass**
eine Lichtdurchlässigkeit des Nichtanzeigebereichs (NDR) niedriger als eine Lichtdurchlässigkeit des mindestens einen Anzeigebereichs (DR) ist.

2. Anzeigetafel (100) nach Anspruch 1, wobei die Lichtdurchlässigkeit des Substrats (110) und der dekorativen Schicht (120) der Anzeigetafel (100) in dem mindestens einen Anzeigebereich (DR) in einem Bereich von 1 % bis 30 % liegt.

3. Anzeigetafel (100) nach einem der vorhergehenden Ansprüche, die ferner eine Berührungssensorschicht (140) umfasst, die sich zwischen der dekorativen Schicht (120) und dem Substrat (110) befindet.

4. Anzeigetafel (100) nach Anspruch 1, wobei Materialien des Substrats (110) in dem mindestens einen Anzeigebereich (DR) und dem Nichtanzeigebereich (NDR) verschieden sind.

5. Anzeigetafel (100) nach einem der vorhergehenden Ansprüche, wobei das Substrat (110) mit einem Farbstoff dotiert ist.

6. Anzeigetafel (100) nach Anspruch 5, wobei Konzentrationen des Farbstoffs in dem mindestens einen Anzeigebereich (DR) und dem Nichtanzeigebereich (NDR) verschieden sind.

7. Anzeigetafel (100) nach einem der vorhergehenden Ansprüche, wobei Dicken des Substrats (110) in dem mindestens einen Anzeigebereich (DR) und dem Nichtanzeigebereich (NDR) verschieden sind.

8. Anzeigetafel (100) nach einem der vorhergehenden Ansprüche, die ferner eine Lichtabsorptionsschicht (150D) umfasst.

9. Anzeigetafel (100) nach Anspruch 8, wobei die Lichtabsorptionsschicht (150D) in dem Nichtanzeigebereich (NDR) angeordnet ist.

10. Anzeigetafel (100) nach Anspruch 8 oder 9, wobei die Lichtabsorptionsschicht (150D) auf der anderen Seite des Substrats (110) relativ zu der dekorativen Schicht (120) angeordnet ist.

11. Anzeigevorrichtung (10), die umfasst:
eine Anzeigetafel (100) nach einem der Ansprüche 1-10; und
mindestens eine Bilderzeugungsvorrichtung (200),
wobei die mindestens eine Bilderzeugungsvorrichtung (200) konfiguriert ist, Bildlicht (IL) in Richtung der Schicht holografischer optischer Elemente (130) zu projizieren,
wobei die Schicht holografischer optischer Elemente (130) zwischen dem Substrat (110) und der mindestens einen Bilderzeugungsvorrichtung (200) angeordnet ist,
wobei die Schicht holografischer optischer Elemente (130) konfiguriert ist, das Bildlicht (IL) in Anzeigelicht (DL) umzusetzen, und konfiguriert ist, das Anzeigelicht (DL) in Richtung des Substrats (110) zu senden.

12. Anzeigevorrichtung (10) nach Anspruch 11, wobei ein Lichtemissionswinkel des Anzeigelichts (DL) nach dem Durchgang durch das Substrat (110) in einem Bereich von 0 Grad bis 45 Grad liegt.

13. Anzeigevorrichtung (10) nach einem der vorhergehenden Ansprüche 11-12, wobei ein Verhältnis einer Helligkeit des Anzeigelichts (DL) nach dem Durchgang durch die Anzeigetafel (100) zu einer Helligkeit des Bildlichts (IL) größer als 5 % ist.

## Revendications

1. Panneau d'affichage (100) ayant au moins une zone d'affichage (DR), comportant :
un substrat (110), ayant un facteur de transmission de la lumière dans la au moins une zone d'affichage (DR) ;
un film décoratif, disposé sur un côté du substrat (110) ;
un film d'élément optique holographique, disposé dans au moins une des au moins une zone d'affichage (DR), et disposé sur un autre côté du substrat (110) par rapport au film décoratif, dans lequel le substrat (110) est disposé entre le film décoratif et le film d'élément optique holographique ; et
une zone de non-affichage (NDR) entourant la au moins une zone d'affichage (DR),
**caractérisé en ce que**
un facteur de transmission de la lumière de la zone de non-affichage (NDR) est inférieur à un facteur de transmission de la lumière de la au moins une zone d'affichage (DR).

2. Panneau d'affichage (100) selon la revendication 1, dans lequel le facteur de transmission de la lumière du substrat (110) et du film décoratif (120) du panneau d'affichage (100) dans la au moins une zone d'affichage (DR) est situé dans les limites d'une plage de 1 % à 30 %.

3. Panneau d'affichage (100) selon l'une quelconque des revendications précédentes, comportant en outre un film de capteur tactile (140) situé entre le film décoratif (120) et le substrat (110).

4. Panneau d'affichage (100) selon la revendication 1, dans lequel des matériaux du substrat (110) dans la au moins une zone d'affichage (DR) et la zone de non-affichage (NDR) sont différents.

5. Panneau d'affichage (100) selon l'une quelconque des revendications précédentes, dans lequel le substrat (110) est dopé avec un colorant.

6. Panneau d'affichage (100) selon la revendication 5, dans lequel des concentrations du colorant dans la au moins une zone d'affichage (DR) et la zone de non-affichage (NDR) sont différentes.

7. Panneau d'affichage (100) selon l'une quelconque des revendications précédentes, dans lequel des épaisseurs du substrat (110) dans la au moins une zone d'affichage (DR) et la zone de non-affichage (NDR) sont différentes.

8. Panneau d'affichage (100) selon l'une quelconque des revendications précédentes, comportant en outre un film absorbant la lumière (150D).

9. Panneau d'affichage (100) selon la revendication 8, dans lequel le film absorbant la lumière (150D) est disposé dans la zone de non-affichage (NDR)

10. Panneau d'affichage (100) selon la revendication 8 ou 9, dans lequel le film absorbant la lumière (150D) est disposé sur l'autre côté du substrat (110) par rapport au film décoratif (120).

11. Appareil d'affichage (10), comportant :
un panneau d'affichage (100) selon l'une quelconque des revendications 1 à 10 ; et
au moins un dispositif de génération d'images (200),
dans lequel le au moins un dispositif de génération d'images (200) est configuré pour projeter une lumière d'image (IL) vers le film d'élément optique holographique (130),
dans lequel le film d'élément optique holographique (130) est disposé entre le substrat (110) et le au moins un dispositif de génération d'images (200),
dans lequel le film d'élément optique holographique (130) est configuré pour convertir la lumière d'image (IL) en lumière d'affichage (DL), et est configuré pour transmettre la lumière d'affichage (DL) vers le substrat (110).

12. Appareil d'affichage (10) selon la revendication 11, dans lequel un angle d'émission de lumière de la lumière d'affichage (DL) après un passage à travers le substrat (110) est situé dans les limites d'une plage de 0 degré à 45 degrés.

13. Appareil d'affichage (10) selon l'une quelconque des revendications 11 à 12 précédentes, dans lequel un rapport d'une luminosité de la lumière d'affichage (DL) après un passage à travers le panneau d'affichage (100) sur une luminosité de la lumière d'image (IL) est supérieur à 5 %.
